# EUROPEAN PATENT SPECIFICATION

(11) **EP 1 541 904 B1**
(45) Date of publication and mention of the grant of the patent: **13.02.2008**
(21) Application number: 04028824.3
(22) Date of filing: 04.12.2004
(51) Int. Cl.: F16H 61/28, F16H 25/22

(54) **A ball screw actuator**
Kugelspindelantrieb
Vérin à vis à billes

(30) Priority: 11.12.2003 JP 2003412839
(43) Date of publication of application: 15.06.2005
(73) Proprietor: NTN Corporation, Osaka (JP)
(72) Inventor: Kazuno, Keisuke, Iwata-shi Shizuoka-ken (JP)
(74) Representative: Thielmann, Andreas

(56) References cited:
- EP-A- 0 647 503
- GB-A- 2 000 844
- US-A- 5 255 882
- US-A- 5 784 922
- PATENT ABSTRACTS OF JAPAN vol. 2003, no. 02, 5 February 2003 (2003-02-05) & JP 2002 317871 A (NSK LTD), 31 October 2002 (2002-10-31)

## Description

### BACKGROUND OF THE INVENTION

### Field of the Invention

The present invention relates to a ball screw actuator according to the preamble of claim 1, used as a driving apparatus for transmission of a vehicle etc.

### Description of Background Art

An automatic transmission comprising a combination of a torque converter and a planetary gear mechanism has been generally used as a transmission of a vehicle and it has been recently used a transmission in which the switching operation of a transmission unit of a conventionally used manual transmission and the connecting on/off operation of a clutch are automatically carried out. This transmission of vehicle includes two types, i.e. a hydraulic type in which the switching operation is hydraulically carried out and a mechanical type having a gear mechanism. Since the hydraulic type has defects such as it must always drive a hydraulic pump during travelling of a vehicle and thus has a large power loss and such as it requires troublesome maintenance for leakage of oil, the mechanical type transmission has been exclusively used. However although the mechanical type transmission is advantageous in easy operation as well as in higher efficiency compared with the typical automatic transmission, it has not been used so many in a small size vehicle such as a passenger car since it is developed for a large vehicle such as a truck etc. and thus has a large and complicated structure.

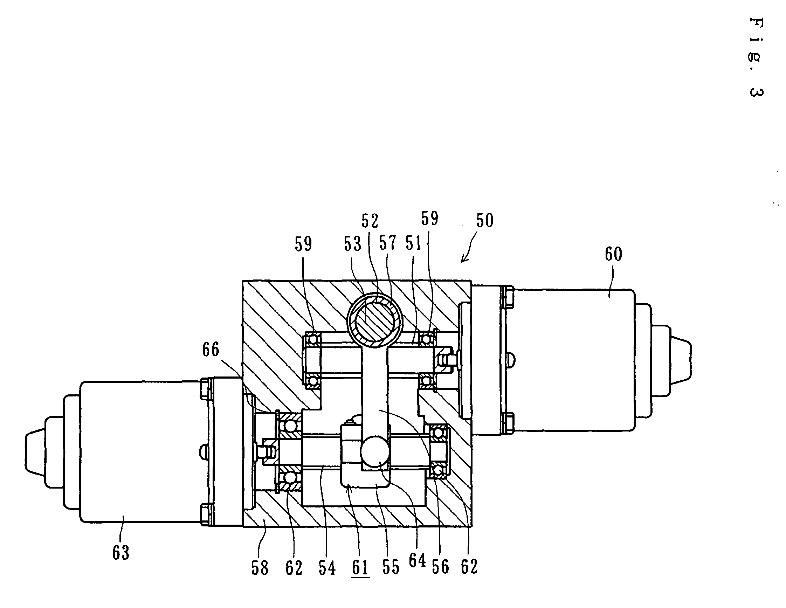

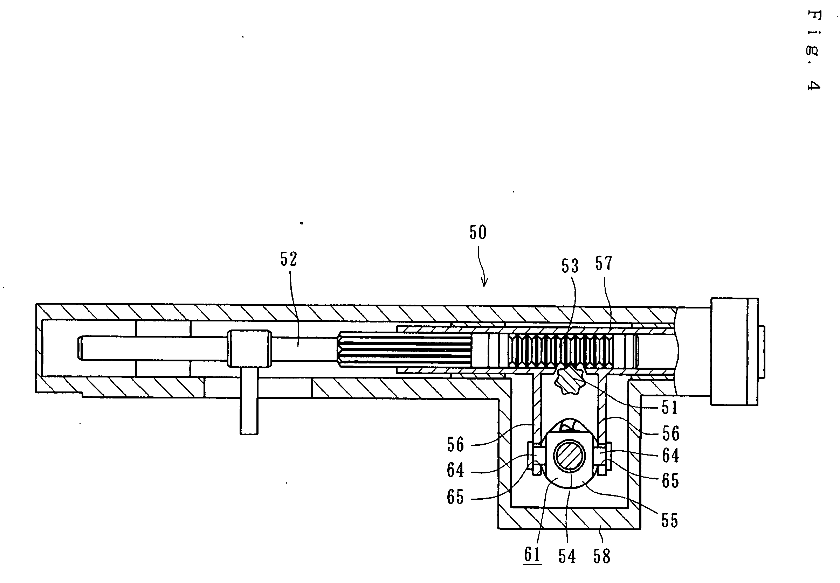

As shown in Figs. 3 and 4, it is known an electric driving apparatus for transmission used for a mechanical transmission of small size vehicle and intended as having a compacted structure and a high efficiency. In this electric driving apparatus for transmission 50 of vehicle, the selecting operation of the transmission is carried out by a first electric motor 60 (Fig. 3) which drives a pinion gear 51 which in turn axially displaces a switching shaft 52 via a rack 53 integrally and co-axially formed with the switching shaft 52, and the shifting operation is carried out by a second electric motor 63 (Fig. 3) which drives a ball screw shaft 54 to impart an axial motion of a ball screw nut 55 threadably engaged on the ball screw shaft 54 to the switching shaft 52 as its rotational motion via a shifting arms 56 and 56 and a shifting sleeve 57.

In this conventional electric driving apparatus for transmission 50, the pinion gear 51 is connected to an output shaft of the first electric motor 60 and rotatably supported by a pair of rolling bearings 59 and 59 within a housing 58, and the ball screw shaft 54 forming a ball screw mechanism 61 is arranged in parallel with the pinion gear 51 and rotatably supported by a pair of rolling bearings 62 and 62 as shown in Fig. 3. The ball screw shaft 54 is connected to an output shaft of the second motor 63, and a pair of pins 64 and 64 integrally formed with the ball screw nut 55 engage apertures 65 and 65 of the shifting arm 56 and 56 (Fig. 4), and the ball screw nut 55 is arranged so that it cannot rotate relative to the ball screw shaft 54 but can axially move along the ball screw shaft 54. Accordingly, the shifting arms 56 and 56 can be swung via the ball screw mechanism 61 by the second electric motor 63. Since such a ball screw mechanism 61 has small friction loss and high efficiency, it is possible to make the apparatus compact and light weight as well as to make the driving motion within the unit smooth and thus to improve the transmitting efficiency (e.g. see the closest prior art document JP2002317871A).

However, although the electric driving apparatus for transmission 50 of the prior art can realize a high reduction ratio because of the actuator using the link mechanism comprising the shifting arms 56 and 56 in addition to the ball screw mechanism 61 and thus can achieve reduction in size and weight of the actuator requiring the high thrusting force and high efficiency, it should have further means for absorbing the axial expansion of the ball screw shaft 54 due to its temperature rising. This is because that the deformation of the ball screw shaft 54 caused by the thermal expansion would prevent smooth rolling motion of balls (not shown) contained within the ball screw nut 55 and thus the smooth motion of the ball screw nut 55. In the actuator using the ball screw mechanism 61 of the prior art, it is intended to absorb the thermal expansion of the ball screw shaft 54 by rigidly securing one of the pair of rolling bearings 62 and 62 supporting the ball screw shaft 54 (i.e. one arranged opposite to the second electric motor 63) and by freely mounting the other of the bearings 62 and 62 (i.e. one arranged near the second electric motor 63) on the housing using a stopping ring 66 with remaining a predetermined axial gap therebetween. However, this arrangement increases the number of parts of the ball screw actuator and thus the size of the actuator, and accordingly it is not suitable for small size vehicle requiring its small size and weight in addition to its low cost.

EP-A-0 647 503 discloses a ball screw actuator wherein the ball screw shaft is rotatably supported in the cantilever manner by a pair of rolling bearings self-contained within the electric motor. However, this prior art discloses that both rolling bearings are on the same size and arranged symmetrically within the electric motor.

### SUMMARY OF THE INVENTION

It is, therefore, an object of the present invention to provide a ball screw actuator which can achieve its reduction both in size and weight in addition to its low cost.

For achieving the object above, there is provided, according to claim 1 of the present invention, a ball screw actuator comprising an electric motor, a motor shaft through-fitted in the electric motor, a ball screw shaft rotationally driven by the electric motor, a ball screw nut threadably engaged on the ball screw shaft via balls and provided with a pair of pins oppositely projected from the outer circumferential surface of the ball screw nut, and a driving shaft to which the axial motion of the ball screw nut is imparted as the swing motion via a swing link engaging the pins, wherein the ball screw shaft is connected to one end of the motor shaft, characterized in that the ball screw shaft is rotatably supported in the cantilever manner by a pair of rolling bearings self-contained within the electric motor and in that one of the pair of rolling bearings supports the thrust load.

According to the invention of claim 1, since the ball screw shaft is connected to one end of the motor shaft, and the ball screw shaft is rotatably supported in the cantilever manner by a pair of rolling bearings self-contained within the electric motor, it is possible to absorb the axial expansion of the ball screw shaft due to temperature rising without providing any means for absorbing the axial expansion thereof. In addition, since any housing for supporting the ball screw shaft as well as rolling bearings of the prior art is not necessary, it is possible to reduce the number of parts and to shorten the length of the ball screw shaft and thus to achieve reduction in size and weight of the actuator. Furthermore, simplification of assembly of the actuator in addition to the reduction of the number of parts can realize the low cost in manufacturing the actuator.

Due to the fact that only one of the pair of rolling bearings supports the thrust load, it is possible to prevent slippage of the rolling bearings due to the alternation load and accordingly to suppress wear and heat generation of bearings and thus to improve their durability.

As in the present invention of claim 2, it may be possible that one of the pair of rolling bearings has an inside gap smaller than that of the other rolling bearing, or as in the present invention of claim 3, it may be possible that one of the pair of rolling bearings is a cylindrical roller bearing and the other of the rolling bearing is a deep groove ball bearing.

According to the present invention of claim 4, the ball screw shaft is integrally formed with one end of the motor shaft. it is possible to shorten the length of the ball screw shaft and thus to achieve reduction in size and weight of the actuator. Furthermore, simplification of assembly of the actuator in addition to the reduction of the number of parts can realize the low cost in manufacturing the actuator.

According to the present invention of claim 5, the ball screw shaft is connected to one end of the motor shaft via a spigot joint. Accordingly, when roll forming the ball screw shaft, the stroke range of the ball screw shaft is not limited by an incomplete screw portion generated during the roll forming process and thus it is possible to shorten the whole length of the ball screw shaft. Accordingly, it is possible to further reduce the size and weight of the actuator.

The ball screw actuator of the present invention comprises an electric motor, a motor shaft through-fitted in the electric motor, a ball screw shaft rotationally driven by the electric motor, a ball screw nut threadably engaged on the ball screw shaft via balls and provided with a pair of pins oppositely projected from the outer circumferential surface of the ball screw nut, and a driving shaft to which the axial motion of the ball screw nut is imparted as the swing motion via a swing link engaging the pins and is characterized in that the ball screw shaft is connected to one end of the motor shaft, and in that the ball screw shaft is rotatably supported in the cantilever manner by a pair of rolling bearings self-contained within the electric motor. Accordingly it is possible to absorbing the axial expansion of the ball screw shaft due to temperature rising without providing any means for absorbing the axial expansion thereof. In addition, since any housing for supporting the ball screw shaft as well as rolling bearings of the prior art is not necessary, it is possible to reduce the number of parts and to shorten the length of the ball screw shaft and thus to achieve reduction in size and weight of the actuator. Furthermore, simplification of assembly of the actuator in addition to the reduction of the number of parts can realize the low cost for manufacturing the actuator.

The ball screw actuator of the present invention comprises an electric motor, a motor shaft through-fitted in the electric motor, a ball screw shaft rotationally driven by the electric motor, a ball screw nut threadably engaged on the ball screw shaft via balls and provided with a pair of pins oppositely projected from the outer circumferential surface of the ball screw nut, and a driving shaft to which the axial motion of the ball screw nut is imparted as the swing motion via a swing link engaging the pins and is characterized in that the ball screw shaft is integrally formed with one end of the motor shaft, in that the ball screw shaft is rotatably supported in the cantilever manner by a pair of rolling bearings self-contained within the electric motor, and in that one of the pair of rolling bearings supports the thrust load.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal sectional view showing a first embodiment of the ball screw actuator of the present invention;
Fig. 2 is a longitudinal sectional view showing a second embodiment of the ball screw actuator of the present invention;
Fig. 3 is a longitudinal sectional view showing an electric driving apparatus for transmission of vehicle of the prior art; and
Fig. 4 is a longitudinal sectional view similar to Fig.3.

### DESCRIPTION OF THE PREFERRED EMBODIMENTS

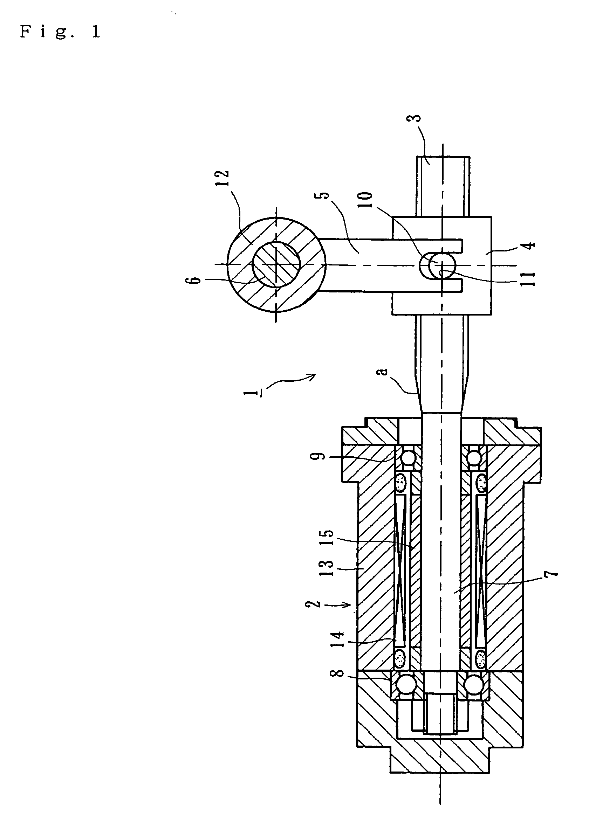

Fig. 1 is a longitudinal sectional view showing a first embodiment of the ball screw actuator of the present invention. The ball screw actuator 1 is used in the electric driving apparatus for transmission of vehicle and comprises a ball screw shaft 3 rotationally driven by an electric motor 2 and a ball screw nut 4 threadably engaged on the ball screw shaft 3 via balls (not shown). The shifting operation of the transmission is carried out by imparting the axial motion of the ball screw nut 4 to the swing motion of a driving shaft 6 via a pair of swing links 5 and 5.

A motor shaft 7 of the electric motor 2 is rotatably supported by a pair of rolling bearings 8 and 9 and the ball screw shaft 3 is integrally formed with one end of the motor shaft 7. A pair of pins 10 and 10 oppositely project from the outer circumferential surface of the ball screw nut 4 threadably engaged on the ball screw shaft 3 via balls (not shown). The pair of swing links 5 and 5 are arranged so that they sandwich the outer circumferential surface of the ball screw nut 4 and each swing link 5 and 5 is formed with a recess for receiving the pin 10. Thus the ball screw nut 4 is arranged so that it cannot rotate relative to the ball screw shaft 3 but can axially move therealong. The other ends of the shifting links 5 and 5 are secured to a shifting sleeve 12 and the driving shaft 6 is fitted into the shifting sleeve 12 via a serration (not shown) so that it can axially displace relative to the shifting sleeve 12 and rotate therewith.

The electric motor 2 comprises a stator 14 secured on the inner circumferential surface of a motor housing 13, and a rotor 15 fitted on the motor shaft 7 and opposed to the stator 14 via a predetermined air gap. When the electric motor 2 is energized, the ball screw shaft 3 is rotated toward a predetermined direction and thus the ball screw nut 4 is axially moved toward a predetermined direction. The axial movement of the ball screw nut 4 is imparted to the driving shaft 6 as its swing motion via the swing links 5 and 5.

One of the pair of rolling bearings 8 and 9 for supporting the motor shaft 7 is a deep groove ball bearing and the rolling bearing 8 arranged at a side opposite to the ball screw shaft 3 (i.e. the left-hand side in Fig. 1) is designed to have a inside gap smaller than that of the rolling bearing 9 arranged at a side near the ball screw shaft 3 (i.e. the right-hand side in Fig. 1) and adapted to support a thrust load. Such a design enables the pair of rolling bearings 8 and 9 self-contained within the electric motor 2 to support the radial load (moment load) and thrust load generated in the ball screw shaft 3, to prevent generation of slippage of the rolling bearings due to alternating load, and to suppress wear and heat generation of the bearings 8 and 9 to improve the durability of the bearings. Although it is herein shown that the pair of rolling bearings 8 and 9 are the deep groove ball bearings having a different inside gap, it is not limited to such an arrangement in so far as one of the rolling bearings supports the thrust load. For example, it is possible to form the rolling bearing 8 arranged at a side opposite to the ball screw shaft 3 (i.e. the left-hand side in Fig. 1) by the cylindrical roller bearing and the rolling bearing 9 arranged at a side near the ball screw shaft 3 (i.e. the right-hand side in Fig. 1) by the deep groove ball bearing, and vice versa.

In this first embodiment, since the ball screw shaft 3 has a cantilever structure in which one end thereof is freely released, it is possible to absorb the axial expansion due to its temperature rising without providing any expansion absorbing means. In addition, a housing for supporting the ball screw shaft 3 and rolling bearings such as used in the prior art are not necessary and thus it is possible to reduce the number of parts and to shorten the length of the ball screw shaft and thus to achieve reduction in size and weight of the actuator. Furthermore, simplification of assembly of the actuator in addition to the reduction of the number of parts can realize the low cost for manufacturing the actuator.

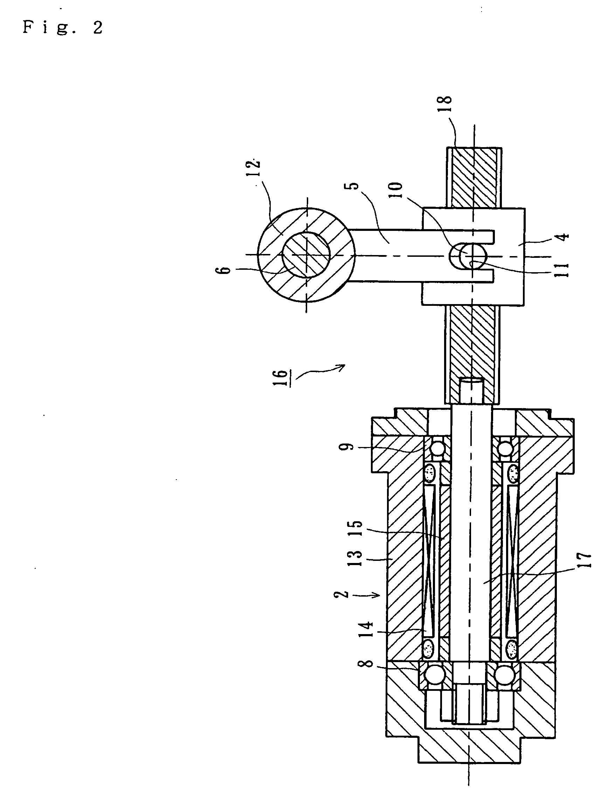

Fig. 2 is a longitudinal sectional view showing a second embodiment of the ball screw actuator of the present invention. Same reference numerals used in the description of the first embodiment are used in the description of the second embodiment for designating the same parts.

A ball screw actuator 16 of this embodiment has a substantially same structure as that of the first embodiment and comprises the electric motor 2, the motor shaft 17 inserted into the electric motor 2, a ball screw shaft 18 connected to the motor shaft 17 and rotationally driven by the electric motor 2, a ball screw nut 4 threadably engaged on the ball screw shaft 18 via balls (not shown), and a driving shaft 6 to which the axial motion of the ball screw nut 4 is imparted as the swing motion via a swing link 5 for carrying out the shifting operation of the transmission.

In contrast to the first embodiment in which the ball screw shaft 3 is integrally formed with the motor shaft 7, the ball screw shaft 18 of this embodiment is formed as a separate part and press fitted co-axially to one end of the motor shaft 17 via a spigot joint. A motor shaft 7 of the electric motor 2 is rotatably supported by a pair of rolling bearings 8 and 9. The connection between the motor shaft 17 and the ball screw shaft 18 is not limited in the press fit connection and they may be detachably connected with each other by inserting one end of the ball screw shaft 18 onto the motor shaft 17 and by radially inserting a connecting pin therethrough.

Similarly to the first embodiment, since the ball screw shaft 18 is supported in the cantilever manner, it is possible to allow the axial expansion of the ball screw shaft 18 due to temperature rising. In addition, a housing for supporting the ball screw shaft 18 and rolling bearings such as used in the prior art are not necessary and thus it is possible to reduce the number of parts. Furthermore, when roll forming the ball screw shaft, the stroke range of the ball screw shaft is not limited by an incomplete screw portion (shown by "a" in Fig. 1) generated during the roll forming process and thus it is possible to shorten the whole length of the ball screw shaft. Accordingly, it is possible to further reduce the size and weight of the actuator.

The ball screw actuator of the present invention can be applied not only to the electric driving apparatus for transmission of a vehicle, but to any driving mechanism especially to an electric actuator for a driving mechanism requiring a high reduction ratio.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

## Claims

1. A ball screw actuator comprising an electric motor (2), a motor shaft (7; 17) through-fitted in the electric motor (2), a ball screw shaft (3;18) rotationally driven by the electric motor (2), a ball screw nut (4) threadably engaged on the ball screw shaft (3; 18) via balls and provided with a pair of pins (10) oppositely projected from the outer circumferential surface of the ball screw nut (4), and a driving shaft (6) to which the axial motion of the ball screw nut (4) is imparted as the swing motion via a swing link (5) engaging the pins (10), wherein the ball screw shaft (3; 18) is connected to one end of the motor shaft (7; 17), **CHARACTERIZED in that** the ball screw shaft (3;18) is rotatably supported in the cantilever manner by a pair of rolling bearings (8; 9) self-contained within the electric motor (2) and **in that** one of the pair of rolling bearings (8) supports the thrust load.

2. The ball screw actuator of claim 1 wherein one of the pair of rolling bearings (8) has an inside gap smaller than that of the other rolling bearing (9).

3. The ball screw actuator of claim 1 wherein one of the pair of rolling bearings (8; 9) is a cylindrical roller bearing and the other of the rolling bearing (9 ; 8) is a deep groove ball bearing.

4. The ball screw actuator any one of claims 1 through 3 wherein the ball screw shaft (3) is integrally formed with one end of the motor shaft (7).

5. The ball screw actuator any one of claims 1 through 3 wherein the ball screw shaft (18) is connected to one end of the motor shaft (17) via a spigot joint.

## Patentansprüche

1. Kugelumlaufpindelaktuator, umfassend einen Elektromotor (2), eine Motorwelle (7; 17), die durchlaufend in dem Elektromotor (2) eingepasst ist, eine Kugelumlaufwelle (3; 18), die drehbar von dem Elektromotor (2) angetrieben ist, eine Kugelumlaufmutter (4), die über Kugeln durch Gewinde an der Kugelumlaufwelle (3; 18) in Eingriff gebracht ist und mit einem Paar Zapfen (10) versehen ist, die gegenüberliegend von der äußeren Umfangsfläche der Kugelumlaufmutter (4) vorstehen, und eine Antriebswelle (6), der die axiale Bewegung der Kugelumlaufmutter (4) als Schwingbewegung über eine Schwingverbindung (5), die die Zapfen (10) in Eingriff nimmt, mitgeteilt ist, wobei die Kugelumlaufwelle (3; 18) an ein Ende der Motorwelle angeschlossen ist (7; 17),
**dadurch gekennzeichnet, dass** die Kugelumlaufwelle (3; 18) drehbar freitragend durch ein Paar Rollenlager (8; 9) getragen ist, die sich unabhängig innerhalb des Elektromotors (2) befinden, und dass das eine des Paars Rollenlager (8) die Schubbelastung trägt.

2. Kugelumlaufaktuator nach Anspruch 1, wobei eines des Paars Rollenlager (8) einen kleineren Innenseitenspalt als den des anderen Rollenlagers (9) aufweist.

3. Kugelumlaufaktuator nach Anspruch 1, wobei das eine des Paars Rollenlager (8; 9) ein Zylinderrollenlager und das andere der Rollenlager (9; 8) ein Rillenkugellager ist.

4. Kugelumlaufaktuator nach einem der Ansprüche 1 bis 3, wobei die Kugelumlaufwelle (3) einstückig mit einem Ende der Motorwelle (7) ausgebildet ist.

5. Kugelumlaufaktuator nach einem der Ansprüche 1 bis 3, wobei die Kugelumlaufwelle (18) über eine Muffenverbindung an ein Ende der Motorwelle (17) angeschlossen ist.

## Revendications

1. Dispositif d'actionnement pour vérin à billes, qui comprend un moteur électrique (2), un arbre de moteur (7; 17) qui traverse le moteur électrique (2), un arbre (3; 18) de vérin à billes entraîné en rotation par le moteur électrique (2), un écrou (4) de vérin à billes engagé de manière filetée sur l'arbre (3; 18) de vérin à billes par l'intermédiaire de billes et doté de deux goujons (10) qui débordent en opposition mutuelle de la surface périphérique extérieure de l'arbre (4) de vérin à billes ainsi qu'un arbre d'entraînement (6) auquel le déplacement axial de l'écrou (4) de vérin à billes est transféré comme déplacement en balancement par une liaison basculante (5) qui engage les goujons (10), l'arbre (3; 18) de vérin à billes étant relié à une extrémité de l'arbre moteur (7; 17),
**caractérisé en ce que** l'arbre (3; 18) du vérin à billes est soutenu à rotation en porte-à-faux par deux paliers de roulement (8; 9) intégrés dans le moteur électrique (2) et **en ce que** l'un des paliers de roulement (8) reprend la charge de poussée.

2. Dispositif d'actionnement de vérin à billes selon la revendication 1, dans lequel l'un des paliers de roulement (8) a un interstice intérieur plus petit que celui de l'autre palier de roulement (9).

3. Dispositif d'actionnement de vérin à billes selon la revendication 1, dans lequel l'un des paliers de roulement (8; 9) est un palier de roulement cylindrique, l'autre palier de roulement (9; 8) étant un palier à billes et rainures profondes.

4. Dispositif d'actionnement de vérin à billes selon l'une des revendications 1 à 3, dans lequel l'arbre (3) de vérin à billes est formé d'un seul tenant avec une extrémité de l'arbre moteur (7).

5. Dispositif d'actionnement de vérin à billes selon l'une des revendications 1 à 3, dans lequel l'arbre (18) dé vérin à billes est relié à une extrémité de l'arbre moteur (17) par un raccord à tourillon.
